# EUROPEAN PATENT APPLICATION

(11) **EP 4 835 269 A1**
(43) Date of publication of application: **04.11.2026**
(21) Application number: 24911959.5
(22) Date of filing: 23.10.2024
(51) Int. Cl.: F01N 3/08, B01D 53/14, B01D 53/92, B01D 53/94, B01D 53/96, F01N 3/24

(54) **TRACTOR**

(30) Priority: 27.12.2023 JP 2023221518; 27.12.2023 JP 2023221519; 27.12.2023 JP 2023221520; 27.12.2023 JP 2023221521; 27.12.2023 JP 2023221522
(71) Applicant: Kubota Corporation, Osaka-shi, Osaka 530-0011 (JP)
(72) Inventor: SAKANO, Tomoyoshi, Sakai-shi, Osaka 590-0908 (JP); MORITA, Atsushi, Sakai-shi, Osaka 590-0908 (JP); KIDERA, Shotaro, Sakai-shi, Osaka 590-0908 (JP); ISHIHARA, Kenji, Sakai-shi, Osaka 590-0908 (JP)
(74) Representative: Cabinet Beau de Loménie
(86) International application number: PCT/JP2024/037776
(87) International publication number: WO 2025/142066

(57) **Abstract**

There is provided a tractor in which an exhaust gas purification system is appropriately disposed.

The present disclosure includes an engine E and exhaust gas purification system 4 or 5 that is disposed in front of or behind the engine E and allows removal of carbon dioxide and nitrogen oxide contained in exhaust gas of the engine E.

## Description

### TECHNICAL FIELD

The present invention relates to a technique of a tractor including an exhaust gas purification system.

### BACKGROUND ART

Conventionally, a technique of an exhaust gas purification system for purifying an exhaust gas is known. The technique is disclosed in, for example, Patent Literature 1.

Patent Literature 1 describes an exhaust gas purification system including an absorption unit that absorbs carbon dioxide contained in an exhaust gas into an absorbent, and an absorbent regeneration unit that separates the carbon dioxide from the absorbent that has absorbed the carbon dioxide and returns the absorbent to the absorption unit. By using such an exhaust gas purification system, for example, the carbon dioxide contained in the exhaust gas discharged from the engine can be absorbed and the exhaust gas can be purified.

By mounting such an exhaust gas purification system on a tractor, it is expected to purify the exhaust gas discharged from an engine of the tractor.

However, it is not common to mount the exhaust gas purification system as described above on the tractor, and there is a demand for a proposal for an appropriate disposition when the exhaust gas purification system is mounted on the tractor.

### CITATION LIST

### PATENT LITERATURE

Patent Literature 1: JP 2019-217492 A

### SUMMARY OF INVENTION

### TECHNICAL PROBLEM

An aspect of the present disclosure has been made in view of the above circumstances, and an object of the disclosure is to provide a tractor in which an exhaust gas purification system is appropriately disposed.

### SOLUTION TO PROBLEM

An object of the disclosure is as described above, and hereinafter, measures to take in order to achieve this object will be described.

A tractor according to an aspect of the present disclosure includes an engine, and an exhaust gas purification system that is disposed in front of or behind the engine and allows removal of carbon dioxide and nitrogen oxide contained in exhaust gas of the engine.

An aspect of the present disclosure can appropriately dispose the exhaust gas purification system.

The exhaust gas purification system includes an absorption unit that absorbs the carbon dioxide and the nitrogen oxide contained in the exhaust gas into an absorbent, and a regeneration unit that recovers carbon dioxide from the absorbent fed from the absorption unit and feeds the absorbent to the absorption unit again.

An aspect of the present disclosure can remove the carbon dioxide and the nitrogen oxide contained in the exhaust gas with a simple configuration.

The exhaust gas purification system includes an adsorption unit that allows adsorption of the carbon dioxide and the nitrogen oxide contained in the exhaust gas, a first cooler that cools at least one of the exhaust gas guided to the adsorption unit, the adsorption unit, or the carbon dioxide desorbed from the adsorption unit by using a refrigerant, and a second cooler that cools at least one of the exhaust gas guided to the adsorption unit, the adsorption unit, or the carbon dioxide desorbed from the adsorption unit by using the refrigerant flowing through a path independent of the first cooler.

An aspect of the present disclosure can remove the carbon dioxide and the nitrogen oxide contained in the exhaust gas with a simple configuration.

### ADVANTAGEOUS EFFECTS OF INVENTION

An aspect of the present disclosure can appropriately dispose the exhaust gas purification system.

### BRIEF DESCRIPTION OF DRAWINGS

Fig. 1 is a schematic diagram showing a configuration of an exhaust gas purification system of a physical adsorption type.
Fig. 2 is a schematic diagram showing a configuration of an exhaust gas purification system of a chemical absorption type.
Fig. 3 is a schematic cross sectional view showing a configuration of an absorption unit.
Fig. 4(a) is a schematic cross sectional view showing a configuration of an absorption unit according to a first modification. Fig. 4(b) is a schematic plan sectional view showing a housing of the absorption unit according to the first modification.
Fig. 5 is a schematic cross sectional view showing a configuration of an absorption unit according to a second modification.
Fig. 6 is a schematic cross sectional view showing a configuration of an absorption unit according to a third modification.
Fig. 7(a) is a schematic diagram of a tractor according to a first embodiment. Fig. 7(b) is a schematic diagram of a tractor according to a second embodiment.
Fig. 8 is a schematic side view of a tractor according to a third embodiment.
Fig. 9(a) is a schematic diagram of a tractor according to a fourth embodiment. Fig. 9(b) is a schematic diagram of a tractor according to a fifth embodiment.

### DESCRIPTION OF EMBODIMENTS

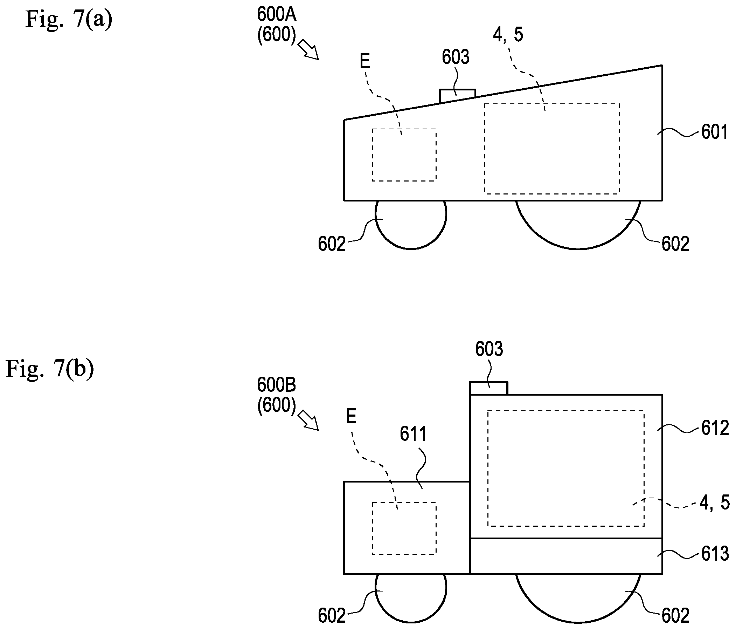

Hereinafter, an example of an exhaust gas purification system mounted on a tractor 600 (see Fig. 7 and the like) will be described. Specifically, as an example of the exhaust gas purification system, an exhaust gas purification system 4 of a physical adsorption type and an exhaust gas purification system 5 of a chemical absorption type will be described in that order.

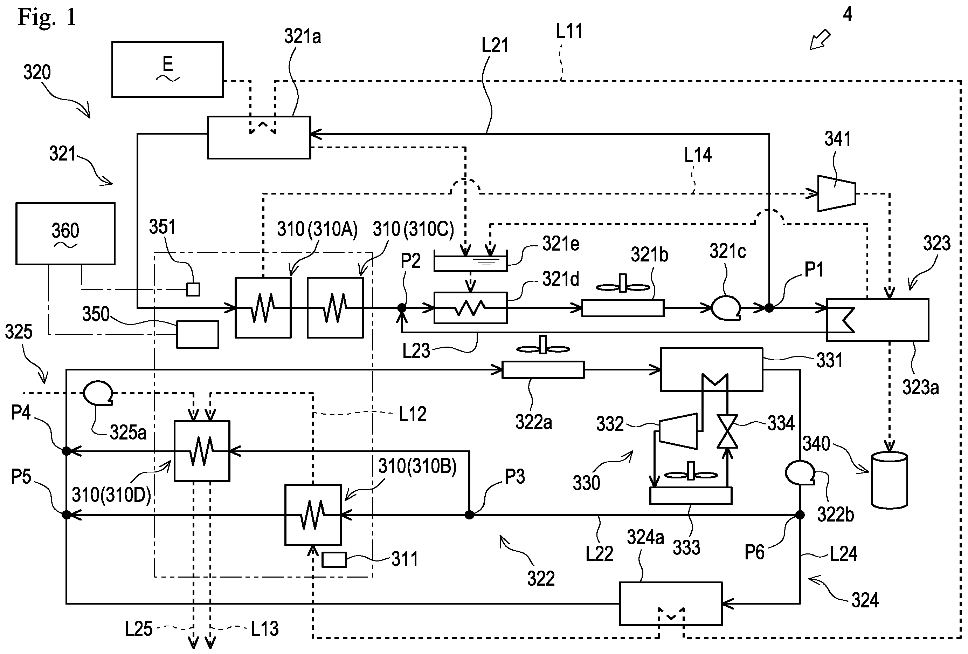

First, an embodiment of an exhaust gas purification system 4 of the physical adsorption type will be described with reference to Fig. 1.

The exhaust gas purification system 4 purifies carbon dioxide (CO₂) and nitrogen oxide (NOx) contained in exhaust gas. In the present embodiment, the exhaust gas purification system 4 that purifies exhaust gas discharged from an engine E will be described as an example. The exhaust gas purification system 4 mainly includes an adsorption/desorption unit 310, a cooler 320, an auxiliary cooler 330, an storage unit 340, a heating device 350, a controller 360, and the like.

The adsorption/desorption unit 310 adsorbs carbon dioxide (CO₂) and nitrogen oxide (NOx) contained in the exhaust gas. The adsorption/desorption unit 310 is provided with, for example, a zeolite-based adsorbent such as Cu-ZSM-5. The zeolite-based adsorbent is a porous material, and the size of the pores affects the absorption capacity of carbon dioxide as described later. The metal supported by the zeolite-based adsorbent affects the capacity as an SCR catalyst as described later.

Fig. 1 shows the adsorption/desorption unit 310 (an adsorption/desorption unit 310A on an upper side and a left side in the drawing) in a state of being heated by waste heat of the exhaust gas fed by a first cooler 321, the adsorption/desorption unit 310 (an adsorption/desorption unit 310B on a lower side and a right side in the drawing) in a state of being cooled by a refrigerant of the second cooler 322, the adsorption/desorption unit 310 (an adsorption/desorption unit 310C on the upper side and the right side in the drawing) in a state of being heated (preheated) by the refrigerant passing through the adsorption/desorption unit 310A, and the adsorption/desorption unit 310 (an adsorption/desorption unit 310D) in a state of being cooled (precooled) by the refrigerant of the second cooler 322, the exhaust gas passing through the adsorption/desorption unit 310B, and outside air fed by a fifth cooler 325 (described later).

In this way, the exhaust gas purification system 4 according to the present embodiment includes the plurality of (four) adsorption/desorption units 310, and processing by each of the adsorption/desorption units 310 can be performed in parallel, for example, when one adsorption/desorption unit 310A is heated, another adsorption/desorption unit 310C is preheated, and when another adsorption/desorption unit 310B is adsorbing carbon dioxide or the like, another adsorption/desorption unit 310D is precooled. Furthermore, by appropriately switching a flow path of the exhaust gas, the refrigerant, or the like, the state of each of the adsorption/desorption units 310 (adsorption/desorption units 310A to 310D) can be arbitrarily switched. For example, each of the adsorption/desorption units 310 can be switched to a state of adsorbing carbon dioxide or the like (adsorption/desorption unit 310B), a state of being preheated (adsorption/desorption unit 310C), a state of being heated to desorb carbon dioxide (adsorption/desorption unit 310A), and a state of being precooled (adsorption/desorption unit 310D) in that order. By sequentially switching the state of each adsorption/desorption unit 310 in this manner, adsorption and desorption of carbon dioxide and the like, reduction of nitrogen oxide, and the like can be sequentially performed in each adsorption/desorption unit 310.

In addition to the above four states, in a case where the nitrogen oxide adsorbed by the adsorption/desorption unit 310 is reduced, the adsorption/desorption unit 310 can be temporarily heated to a temperature higher than a temperature in a state in which carbon dioxide is desorbed (adsorption/desorption unit 310A). By feeding a reducing agent together with the exhaust gas to the adsorption/desorption unit 310 (in the present embodiment, the adsorption/desorption unit 310B) in this state, the nitrogen oxide adsorbed by the adsorption/desorption unit 310 can be reduced.

Specifically, the exhaust gas from the engine E is guided to the adsorption/desorption unit 310 (adsorption/desorption unit 310B) through a path L11 constituted by a pipe or the like. The reducing agent can be injected from an injection device 311 to the exhaust gas fed to the adsorption/desorption unit 310B through the path L11. As the reducing agent, urea or hydrocarbon can be used. For example, in a case where urea is used as the reducing agent, urea water stored in a tank can be injected by the injection device 311. The injected urea water is thermally decomposed by waste heat of the exhaust gas to generate ammonia. This ammonia acts as a reducing agent. In a case where hydrocarbon is used as the reducing agent, hydrocarbon decomposed and produced from diesel fuel can be used. The exhaust gas having passed through the adsorption/desorption unit 310B and decreased in temperature is fed to the adsorption/desorption unit 310D through a path L12, and can cool the adsorption/desorption unit 310D. The exhaust gas that has cooled the adsorption/desorption unit 310D is then discharged to the outside through a path L13.

The cooler 320 cools the exhaust gas and each unit of the exhaust gas purification system 4 by using the refrigerant. The cooler 320 mainly includes a first cooler 321, a second cooler 322, a third cooler 323, a fourth cooler 324, a fifth cooler 325, and the like. The first cooler 321 and the third cooler 323, and the second cooler 322 and the fourth cooler 324 share some flow paths of the refrigerant. Hereinafter, a specific description will be given.

The first cooler 321 cools the exhaust gas discharged from the engine E by using the refrigerant and heats the adsorption/desorption unit 310 by using the waste heat of the exhaust gas. As the refrigerant, for example, a liquid phase fluid (for example, cooling water, oil, and the like) having a relatively large heat capacity can be used. The first cooler 321 mainly includes a circulation path L21, a heat exchanger 321a, a radiator 321b, a pump 321c, a heat exchanger 321d, and the like.

The circulation path L21 is constituted by a pipe or the like, and through which the refrigerant can flow. The circulation path L21 is formed so as to sequentially connect the heat exchanger 321a, the adsorption/desorption unit 310A, the adsorption/desorption unit 310C, the heat exchanger 321d, the radiator 321b, and the pump 321c.

The heat exchanger 321a is provided in a middle portion of the path L11. The heat exchanger 321a can exchange heat between the exhaust gas discharged from the engine E and the refrigerant to lower the temperature of the exhaust gas. The refrigerant that has received the heat of the exhaust gas by the heat exchanger 321a is fed to the adsorption/desorption unit 310 (adsorption/desorption unit 310A). As a result, the adsorption/desorption unit 310A can be heated. By heating the adsorption/desorption unit 310A, carbon dioxide adsorbed by the adsorption/desorption unit 310A can be desorbed.

The refrigerant that has passed through the adsorption/desorption unit 310A is further fed to the adsorption/desorption unit 310C. As a result, the adsorption/desorption unit 310C can be preheated. The preheated adsorption/desorption unit 310C is switched to the adsorption/desorption unit 310A by switching a flow path of the refrigerant or the like later. The refrigerant that has passed through the adsorption/desorption unit 310C is cooled by the heat exchanger 321d.

Water from a storage 321e capable of storing water is appropriately fed to the heat exchanger 321d by a pump (not shown). In the heat exchanger 321d, the refrigerant is cooled by heat exchange performed between the water fed from the storage 321e and the refrigerant having passed through the adsorption/desorption unit 310C. As the water stored in the storage 321e, condensed water generated in the heat exchanger 321a that performs heat exchange with the exhaust gas and a heat exchanger 323a of the third cooler 323 described later is used.

The refrigerant that has passed through the heat exchanger 321d further radiates heat at the radiator 321b and then fed to the pump 321c. The refrigerant fed to the pump 321c is fed again to the heat exchanger 321a by the pump 321c.

In this manner, the first cooler 321 can cool the exhaust gas by circulating the refrigerant, and can heat the adsorption/desorption unit 310 by using the waste heat of the exhaust gas.

The second cooler 322 cools the adsorption/desorption unit 310B and the adsorption/desorption unit 310D by using the refrigerant. The second cooler 322 mainly includes a circulation path L22, a radiator 322a, a pump 322b, and the like.

The circulation path L22 is constituted by a pipe or the like, and through which the refrigerant can flow. The circulation path L22 is formed so as to sequentially connect the adsorption/desorption unit 310B, the adsorption/desorption unit 310D, the radiator 322a, the auxiliary cooler 330, and the pump 322b. The circulation path L22 is formed independently of the circulation path L21 of the first cooler 321. That is, the refrigerant used in the circulation path L21 (first cooler 321) and the refrigerant used in the circulation path L22 (second cooler 322) are independent of each other, and are not mixed with each other. The circulation path L22 is branched at a branch portion P3 provided upstream of the adsorption/desorption unit 310B and the adsorption/desorption unit 310D, and is connected to the adsorption/desorption unit 310B and the adsorption/desorption unit 310D, respectively. The circulation path L21 branched at the branch portion P3 joins again at a branch portion P4 provided downstream of the adsorption/desorption unit 310B and the adsorption/desorption unit 310D.

In the second cooler 322, the refrigerant pressure-fed from the pump 322b is fed to the adsorption/desorption unit 310B and the adsorption/desorption unit 310D through a branch portion P6 and the branch portion P3. As a result, the adsorption/desorption unit 310B and the adsorption/desorption unit 310D can be cooled. The refrigerant that has passed through the adsorption/desorption unit 310B and the adsorption/desorption unit 310D is fed to the radiator 322a through the branch portion P4. The refrigerant increased in temperature due to the heat of the adsorption/desorption unit 310B and the adsorption/desorption unit 310D radiates heat at the radiator 322a and then fed to the pump 322b through the auxiliary cooler 330. The refrigerant fed to the pump 322b is fed again to the adsorption/desorption unit 310B and the adsorption/desorption unit 310D by the pump 322b.

In this manner, the second cooler 322 can cool the adsorption/desorption unit 310B and the adsorption/desorption unit 310D by circulating the refrigerant.

The third cooler 323 cools carbon dioxide to be fed to an storage unit 340 described later by using the refrigerant. The third cooler 323 mainly includes a circulation path L23, the heat exchanger 323a, the radiator 321b, the pump 321c, the heat exchanger 321d, and the like. Note that, in the third cooler 323, a refrigerant common to the first cooler 321 is used. In the third cooler 323, the radiator 321b, the pump 321c, and the heat exchanger 321d common to the first cooler 321 are used.

The circulation path L23 is constituted by a pipe or the like, and through which the refrigerant can flow. The circulation path L23 is formed so as to sequentially connect the heat exchanger 323a, the heat exchanger 321d, the radiator 321b, and the pump 321c. The circulation path L23 is formed so as to branch from a branch portion P1 formed downstream of the pump 321c in the circulation path L21 and a branch portion P2 formed between the adsorption/desorption unit 310C and the heat exchanger 321d in the circulation path L21. In this manner, a part of the circulation path L21 of the first cooler 321 (a portion from the branch portion P2 to the branch portion P1) constitutes a part of the circulation path L23 of the third cooler 323.

The heat exchanger 323a is provided in a middle portion of the circulation path L22 (downstream of the branch portion P1). The heat exchanger 323a can exchange heat between carbon dioxide fed to the storage unit 340 described later and the refrigerant flowing through the circulation path L23 to lower a temperature of the carbon dioxide. The refrigerant that has received the heat of the carbon dioxide in the heat exchanger 323a is cooled in the heat exchanger 321d and radiates heat at the radiator 321b, and then fed to the pump 321c. The refrigerant fed to the pump 321c is fed again to the heat exchanger 323a by the pump 321c.

In this manner, the third cooler 323 can cool the carbon dioxide fed to the storage unit 340 by circulating the refrigerant common to the first cooler 321.

The fourth cooler 324 further cools the exhaust gas cooled by the first cooler 321 by using the refrigerant. The fourth cooler 324 mainly includes a circulation path L24, a heat exchanger 324a, the radiator 322a, the pump 322b, and the like. Note that, in the fourth cooler 324, a refrigerant common to the second cooler 322 is used. In the fourth cooler 324, the radiator 322a and the pump 322b common to the second cooler 322 are used.

The circulation path L24 is constituted by a pipe or the like, through which the refrigerant can flow. The circulation path L24 is formed so as to sequentially connect the radiator 322a, the auxiliary cooler 330, the pump 322b, and the heat exchanger 324a. The circulation path L24 is formed so as to branch from a branch portion P6 formed downstream of the pump 322b in the circulation path L22 and a branch portion P5 formed between the adsorption/desorption unit 310B and the branch portion P4 in the circulation path L22. In this manner, a part of the circulation path L22 of the second cooler 322 (portion from the branch portion P5 to the branch portion P6 through the branch portion P4, the radiator 322a, and the pump 322b) constitutes a part of the circulation path L24 of the fourth cooler 324.

The heat exchanger 324a is provided in a middle portion of the circulation path L24 (downstream of the branch portion P6). The heat exchanger 324a performs heat exchange between the refrigerant and the exhaust gas cooled by the heat exchanger 321a of the first cooler 321 and flowing through the path L11 to further lower the temperature of the exhaust gas. The refrigerant that has received the heat of the exhaust gas by the heat exchanger 324a radiates heat at the radiator 322a and then is fed to the pump 322b through the auxiliary cooler 330. The refrigerant fed to the pump 322b is fed again to the heat exchanger 324a by the pump 322b.

In this manner, the fourth cooler 324 can further cool the exhaust gas by circulating the refrigerant.

The fifth cooler 325 cools the adsorption/desorption unit 310D by using gas (in the present embodiment, air). The fifth cooler 325 mainly includes a path L25, a pump 325a, and the like.

The path L25 is constituted by a pipe or the like, through which gas can flow. The path L25 is formed so as to sequentially connect the pump 325a and the adsorption/desorption unit 310D. An upstream end of the path L25 is opened to an external space and can introduce external air (outside air).

The air introduced from the outside by the pump 325a flows through the adsorption/desorption unit 310D and is released to the outside. At this time, the adsorption/desorption unit 310D can be cooled by the air passing through the adsorption/desorption unit 310D.

The auxiliary cooler 330 cools the refrigerant used in the cooler 320(in particular, the second cooler 322 and the fourth cooler 324) in an auxiliary manner. The auxiliary cooler 330 is a refrigeration cycle that performs cooling while changing a phase of an appropriate refrigerant (for example, carbon dioxide). The auxiliary cooler 330 mainly includes a heat exchanger 331, a compressor 332, a condenser 333, an expansion valve 334, and the like.

The heat exchanger 331 is disposed between the radiator 322a and the pump 322b on a refrigerant flow path (the circulation path L22 and the circulation path L24). The heat exchanger 331 can exchange heat with the refrigerant flowing through the path to further lower the temperature of the refrigerant cooled by the radiator 322a. The refrigerant such as carbon dioxide used for heat exchange in the heat exchanger 331 is compressed by the compressor 332 and then radiates at the condenser 333. The refrigerant having radiated heat at the condenser 333 can be fed to the heat exchanger 331 again through the expansion valve 334.

For example, when the cooling capacities of the second cooler 322 and the fourth cooler 324 are insufficient only with the radiator 322a (in a case where it is desired to cool the exhaust gas from the engine E to a temperature lower than the outside air temperature, or the like), the refrigerant of the second cooler 322 and the fourth cooler 324 can be further cooled by operating the auxiliary cooler 330 configured as described above, and the cooling capacity can be improved.

The storage unit 340 stores carbon dioxide desorbed from the adsorption/desorption unit 310A. The storage unit 340 is connected to the adsorption/desorption unit 310A through a path L14 constituted by a pipe or the like. A compressor 341 and the heat exchanger 323a are provided in a middle portion of the path L14. The carbon dioxide desorbed from the adsorption/desorption unit 310A is compressed by the compressor 341, and then radiates heat at the heat exchanger 323a and is stored in the storage unit 340.

The heating device 350 is a device for heating the adsorption/desorption unit 310. The heating device 350 can be constituted by, for example, an electric heating wire or the like. The temperature of the adsorption/desorption unit 310 can be detected by a temperature sensor 351. By controlling the operation of the heating device 350 or the like while detecting the temperature of the adsorption/desorption unit 310 with the temperature sensor 351, the temperature of the adsorption/desorption unit 310 can be adjusted to an arbitrary temperature.

The controller 360 controls the operation of the exhaust gas purification system 4. The controller 360 is constituted by an arithmetic processing device such as a CPU, a storage device such as a RAM, a ROM, or an HDD, and the like. The controller 360 can receive a detection result of the temperature sensor 351. The controller 360 can also control the heating device 350. The controller 360 is not limited thereto, and can also control the operation of each unit of the exhaust gas purification system 4.

Although detailed description is omitted, the flow path of a fluid (for example, carbon dioxide or the like adsorbed and desorbed in the adsorption/desorption unit 310) in the exhaust gas purification system 4 can be arbitrarily switched by using a switching device (pipe, switching valve, and the like) (not shown).

The exhaust gas purification system 4 configured as described above can purify carbon dioxide and nitrogen oxide contained in the exhaust gas discharged from the engine E. Hereinafter, a specific description will be given.

First, a case of purifying carbon dioxide and nitrogen oxide contained in the exhaust gas will be described.

In this case, the exhaust gas discharged from the engine E is cooled to approximately a predetermined first temperature T1(for example, the outside air temperature (25 degrees)) by the first cooler 321 and the fourth cooler 324 in a middle portion of a flow through the path L11. The cooled exhaust gas is fed to the adsorption/desorption unit 310B, and carbon dioxide and nitrogen oxide in the exhaust gas are adsorbed by the adsorbent. As described above, the exhaust gas fed to the adsorption/desorption unit 310B is cooled by the first cooler 321 and the fourth cooler 324, and thus, carbon dioxide and nitrogen oxide in the exhaust gas can be efficiently adsorbed.

In a case where the exhaust gas needs to be further cooled (in a case where the exhaust gas temperature is desired to be lower than the outside air temperature), the auxiliary cooler 330 is operated. When the auxiliary cooler 330 operates, the temperature of the refrigerant in the fourth cooler 324 can be lowered by the refrigeration cycle of the auxiliary cooler 330 to cool the exhaust gas to a lower temperature. For example, by cooling the exhaust gas to about 0 degrees, moisture in the exhaust gas can be effectively removed.

The exhaust gas in which the carbon dioxide and the nitrogen oxide are adsorbed in the adsorption/desorption unit 310B is fed to the adsorption/desorption unit 310D through the path L12. As a result, the adsorption/desorption unit 310D can be cooled by using the exhaust gas cooled when flowing through the adsorption/desorption unit 310B. As described above, in the present embodiment, the adsorption/desorption unit 310D can be cooled (precooled) by using the exhaust gas flowing through the adsorption/desorption unit 310B in addition to the second cooler 322 and the fifth cooler 325. Accordingly, power consumption of the second cooler 322 and the fifth cooler 325 can be reduced. The exhaust gas that has passed through the adsorption/desorption unit 310D is discharged to the outside through the path L13.

Next, a case where carbon dioxide adsorbed by the adsorption/desorption unit 310 is desorbed will be described.

In this case, waste heat of the exhaust gas recovered by the heat exchanger 321a of the first cooler 321 is fed to the adsorption/desorption unit 310A through the refrigerant, and the adsorption/desorption unit 310A is heated to a temperature higher than the first temperature T1. The adsorption/desorption unit 310A is heated to a predetermined second temperature T2(for example, about 150 degrees) at which carbon dioxide can be desorbed. At this time, the adsorption/desorption unit 310 can also be heated by using the heating device 350. As a result, carbon dioxide is desorbed from the adsorption/desorption unit 310A. The carbon dioxide released from the adsorption/desorption unit 310A is stored in the storage unit 340 through the path L14.

Next, a case where the nitrogen oxide adsorbed by the adsorption/desorption unit 310 is reduced will be described.

In this case, the adsorption/desorption unit 310B is heated to a temperature higher than the second temperature T2 at the time of desorbing carbon dioxide. The adsorption/desorption unit 310 is heated to such a predetermined third temperature T3 (for example, about 400 degrees) as to be able to function as an SCR catalyst. For the heating, first, waste heat of the exhaust gas recovered by the heat exchanger 321a of the first cooler 321 is used. The adsorption/desorption unit 310A and the adsorption/desorption unit 310C can be heated by the waste heat. In a case where the waste heat is insufficient, the heating device 350 is operated to heat the adsorption/desorption unit 310 to a target temperature. The heated adsorption/desorption unit 310A and adsorption/desorption unit 310C are switched to the adsorption/desorption unit 310B.

A reducing agent is sprayed onto the exhaust gas fed to the adsorption/desorption unit 310B through the path L11. The exhaust gas passes through the adsorption/desorption unit 310B, and thus, the nitrogen oxide adsorbed by the adsorption/desorption unit 310B is reduced. The exhaust gas that has passed through the adsorption/desorption unit 310B is discharged to the outside through the path L12 and the path L13.

The temperature of the adsorption/desorption unit 310 and the flow path of the fluid in each unit as described above can be switched by the controller 360. By switching the temperature of the adsorption/desorption unit 310 to one of the first temperature T1, the second temperature T2, and the third temperature T3 by the controller 360 and appropriately injecting the reducing agent from the injection device 311, carbon dioxide and nitrogen oxide can be adsorbed, carbon dioxide can be desorbed, and nitrogen oxide can be reduced by using the common adsorption/desorption unit 310. As a result, it is not necessary to individually provide a purification device that purifies carbon dioxide and a purification device that purifies nitrogen oxide, and thus, the configuration of the exhaust gas purification system 4 can be simplified.

In the present embodiment, the exhaust gas, the adsorption/desorption unit 310, and the like are cooled by the plurality of coolers (first cooler 321, third cooler 323, second cooler 322, and fourth cooler 324) having paths independent from each other. As a result, for example, the refrigerant having a high temperature in one cooler does not mix into the path of another cooler and does not lower the cooling capacity of the cooler, so that power consumption for cooling can be reduced.

In the present embodiment, the exhaust gas and the adsorption/desorption unit 310 are cooled by using the cooler 320 mainly using a liquid-phase refrigerant. As a result, it is possible to reduce the use of a device (compressor or the like) having large power consumption. In the present embodiment, the fifth cooler 325 is configured to cool the adsorption/desorption unit 310 by using outside air. Accordingly, power consumption can be further reduced. Furthermore, in a case where the cooling capacity is insufficient, the cooling capacity can be temporarily improved by using the auxiliary cooler 330.

Although the exhaust gas purification system 4 of the physical adsorption system has been described above, the present invention is not limited to the above configuration, and various modifications can be made.

For example, as described above, it is also possible to configure such that a plurality of adsorption/desorption units 310 is provided, carbon dioxide and the like are adsorbed by some of the adsorption/desorption units 310, and carbon dioxide is desorbed by another adsorption/desorption unit 310 at the same time. Such a configuration can efficiently purify the exhaust gas.

In the above embodiment, an example in which the four adsorption/desorption units 310 are used has been described, but the present invention is not limited to this example, and the number of the adsorption/desorption units 310 can be arbitrarily changed. For example, the exhaust gas purification system 4 can also be configured by using a single adsorption/desorption unit 310.

The first temperature T1, the second temperature T2, and the third temperature T3 described in the above embodiment are not particularly limited, and can be appropriately changed in accordance with the processing contents.

In the above embodiment, an example has been described in which the cooler 320 includes the first cooler 321, the second cooler 322, the third cooler 323, the fourth cooler 324, and the fifth cooler 325, but the present invention is not limited to this example, and the configuration of the cooler 320 can be arbitrarily changed. For example, in a case where the exhaust gas can be sufficiently cooled by the first cooler 321, a configuration is possible in which the fourth cooler 324 for cooling the exhaust gas downstream of the first cooler 321 is not provided.

In the above embodiment, an example has been described in which the path of the third cooler 323 that cools the desorbed carbon dioxide is partially common to the first cooler 321, and thus, a common refrigerant is used for the first cooler 321 and the third cooler 323. However, the present invention is not limited to this example. For example, the path of the third cooler 323 may be partially common to the path of the second cooler 322 instead of the first cooler 321, or can be configured independently of other coolers (the first cooler 321, the second cooler 322, and the like). Similarly, the path of the fourth cooler 324 is not necessarily partially common to the path of the second cooler 322.

In the above embodiment, an example has been described in which the adsorption/desorption unit 310D is cooled (precooled) by using the exhaust gas having passed through the adsorption/desorption unit 310B. However, the present invention is not limited to this example, and the exhaust gas having passed through one adsorption/desorption unit 310 is only required to be used to adjust the temperature of another adsorption/desorption unit 310. For example, the exhaust gas can be used not for cooling but for heating another adsorption/desorption unit 310.

In the above embodiment, an example is described in which two adsorption/desorption units 310 (the adsorption/desorption unit 310A and the adsorption/desorption unit 310C) to be heated are connected in series by the circulation path L21, but the present invention is not limited to this example. That is, the adsorption/desorption unit 310A and the adsorption/desorption unit 310C can also be connected in parallel by using a branched path.

In the above embodiment, an example is described in which two adsorption/desorption units 310 (the adsorption/desorption unit 310B and the adsorption/desorption unit 310D) to be cooled are connected in parallel by the branched circulation path L21, but the present invention is not limited to this example. That is, the adsorption/desorption unit 310B and the adsorption/desorption unit 310D can also be connected in series by using a path not branched.

In this manner, the plurality of adsorption/desorption units 310 can be connected in series or in parallel. A configuration may be employed in which series and parallel can be arbitrarily switched by using a switching mechanism (such as a switching valve) capable of switching a flow path of the refrigerant. Series and parallel can be switched, for example, in accordance with necessary cooling capacity or the like. For example, in a case where the plurality of adsorption/desorption units 310 is connected in series, the pump capacity in a case where the same volume of refrigerant is sent to the adsorption/desorption unit 310 can be reduced as compared with a case where the plurality of adsorption/desorption units 310 is connected in parallel, and thus, power consumption can be suppressed. Accordingly, downsizing and simplification of a pump and a path (pipe and the like) can be achieved, and the space can be saved.

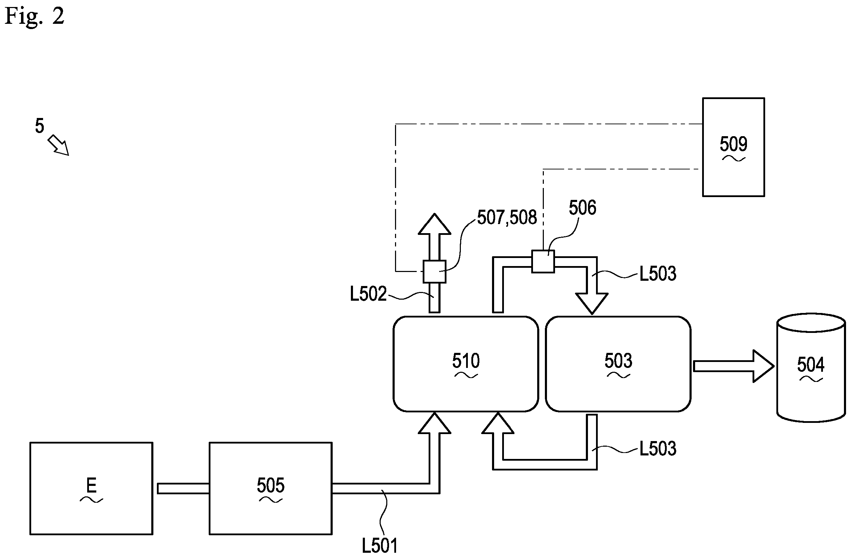

Next, an embodiment of the exhaust gas purification system 5 of the chemical absorption type will be described with reference to Fig. 2.

The exhaust gas purification system 5 purifies carbon dioxide (CO₂) and nitrogen oxide (NOx) contained in exhaust gas. In the present embodiment, the exhaust gas purification system 5 that purifies exhaust gas discharged from an engine E will be described as an example. The exhaust gas purification system 5 mainly includes an absorption unit 510, a regeneration unit 503, an storage unit 504, an oxidation catalyst 505, an absorbent sensor 506, a carbon dioxide sensor 507, a nitrogen oxide sensor 508, a controller 509, and the like.

The absorption unit 510 absorbs carbon dioxide and nitrogen oxide. A guide path L501 (pipe or the like) that guides the exhaust gas from the engine E is connected to the absorption unit 510. The absorption unit 510 is provided with a hollow housing (absorption chamber), and an absorbent circulated between the hollow housing and the regeneration unit 503 described later is sprayed into the housing. The carbon dioxide and the nitrogen oxide contained in the exhaust gas can be absorbed by the absorbent by bringing the exhaust gas fed into the absorption unit 510 into contact with the sprayed absorbent. The exhaust gas in which the carbon dioxide and the nitrogen oxide are absorbed (purified) in the absorption unit 510 is discharged to the outside through an appropriate discharge path L502 (pipe or the like).

Here, as the absorbent, for example, an organic aqueous solution such as amine or an inorganic aqueous solution (alkaline aqueous solution) such as potassium hydrogen carbonate or sodium hydrogen carbonate can be used. By using such an absorbent, carbon dioxide in the exhaust gas is selectively absorbed by the absorbent. The nitrogen oxide in the exhaust gas is absorbed by the absorbent when the absorbent is converted into a nitric acid compound by a reduction reaction.

An appropriate circulation path L503 (pipe or the like) is formed between the absorption unit 510 and the regeneration unit 503 to be described later, and the absorbent can be circulated between the absorption unit 510 and the regeneration unit 503.

The regeneration unit 503 regenerates the absorbent that has absorbed carbon dioxide. The regeneration unit 503 is provided with a hollow housing (regeneration chamber), and the absorbent fed from the absorption unit 510 is sprayed into the housing. The regeneration unit 503 can separate carbon dioxide from the absorbent by heating the sprayed absorbent. The absorbent from which the carbon dioxide has been separated is fed to the absorption unit 510 again.

The storage unit 504 stores the carbon dioxide separated in the regeneration unit 503. The storage unit 504 is connected to the regeneration unit 503 and can store carbon dioxide discharged from the regeneration unit 503.

The oxidation catalyst 505 oxidizes hydrocarbons and carbon monoxide contained in the exhaust gas shared with the absorption unit 510. The oxidation catalyst 505 is provided in a middle portion of the guide path L501 that guides the exhaust gas from the engine E to the absorption unit 510.

The absorbent sensor 506 detects a state of the absorbent. The absorbent sensor 506 is provided in a middle portion of the absorbent circulation path L503 circulating between the absorption unit 510 and the regeneration unit 503. The absorbent sensor 506 can detect the state of the absorbent flowing through the installation location. The state of the absorbent detected by the absorbent sensor 506 includes, for example, at least one of viscosity, temperature, density, pH, and the like of the absorbent.

The carbon dioxide sensor 507 detects the amount of carbon dioxide contained in the exhaust gas discharged from the absorption unit 510. The carbon dioxide sensor 507 is provided in a middle portion of the discharge path L502 of the exhaust gas discharged from the absorption unit 510.

The nitrogen oxide sensor 508 detects the amount of nitrogen oxide contained in the exhaust gas discharged from the absorption unit 510. The nitrogen oxide sensor 508 is provided in a middle portion of the discharge path L502 of the exhaust gas discharged from the absorption unit 510.

The controller 509 performs appropriate calculation on the basis of detection results by the absorbent sensor 506, the carbon dioxide sensor 507, the nitrogen oxide sensor 508, and the like. The controller 509 is constituted by an arithmetic processing device such as a CPU, a storage device such as a RAM, a ROM, or an HDD, and the like. The controller 509 can receive detection results of the absorbent sensor 506, the carbon dioxide sensor 507, and the nitrogen oxide sensor 508.

In the exhaust gas purification system 5 configured as described above, the exhaust gas discharged from the engine E is guided to the oxidation catalyst 505, and hydrocarbons and the like contained in the exhaust gas are oxidized. Thereafter, the exhaust gas is guided to the absorption unit 510, and carbon dioxide and nitrogen oxide contained in the exhaust gas are absorbed by the absorbent. The exhaust gas purified by the absorption unit 510 in this manner is discharged to the outside.

The absorbent that has absorbed carbon dioxide and nitrogen oxide in the absorption unit 510 is fed to the regeneration unit 503 to separate the carbon dioxide. The absorbent from which the carbon dioxide has been separated is fed to the absorption unit 510 again and used for purification of the exhaust gas. The carbon dioxide separated by the regeneration unit 503 is stored in the storage unit 504.

In this manner, in the exhaust gas purification system 5 according to the present embodiment, the absorption unit 510 can absorb not only carbon dioxide but also nitrogen oxide in the exhaust gas. As a result, it is not necessary to separately provide an exhaust gas purification device for purifying nitrogen oxide in the exhaust gas, and thus, the configuration of the exhaust gas purification system 5 can be simplified.

Note that, when the absorbent absorbs nitrogen oxide, the absorption capacity of carbon dioxide and nitrogen oxide by the absorbent decreases. Therefore, the absorbent that has absorbed nitrogen oxide to some extent needs to be replaced with a new absorbent. In the exhaust gas purification system 5 according to the present embodiment, processing for determining an appropriate replacement time of the absorbent can be performed by using the detection results by the absorbent sensor 506, the carbon dioxide sensor 507, and the nitrogen oxide sensor 508. Hereinafter, a specific description will be given.

First, a method of determining the replacement time of the absorbent by using the absorbent sensor 506 will be described. In the present embodiment, the state of the absorbent (viscosity, temperature, density, pH, and the like) is detected by using the absorbent sensor 506. The controller 509 according to the present embodiment can calculate the amount of nitrogen oxide absorbed in the absorbent or the replacement time of the absorbent by using the detection result by the absorbent sensor 506.

It has been found that there is a certain correlation between the state of the absorbent (viscosity, temperature, density, pH, and the like) and the amount of nitrogen oxide absorbed in the absorbent or the appropriate replacement time of the absorbent. Therefore, the controller 509 stores in advance the relationship between the state of the absorbent (viscosity, temperature, density, pH, and the like) and the amount of nitrogen oxide absorbed by the absorbent or the appropriate replacement time of the absorbent. This relationship can be determined by an experiment performed in advance, numerical calculation (simulation), or the like. As an example, the relationship between the pH of the absorbent and the amount of nitrogen oxide absorbed in the absorbent and the appropriate replacement time can be stored in the controller 509 in advance. As another example, the relationship between the viscosity of the absorbent at a certain temperature and the amount of nitrogen oxide absorbed in the absorbent and the appropriate replacement time can be stored in the controller 509 in advance.

The controller 509 calculates (estimates) the amount of nitrogen oxide absorbed by the absorbent or the replacement time of the absorbent at an arbitrary timing (for example, every certain period) during the operation of the exhaust gas purification system 5 on the basis of the above relationship and the state of the absorbent actually detected by the absorbent sensor 506. In a case of calculating the amount of nitrogen oxide absorbed by the absorbent or the replacement time of the absorbent, the controller 509 can notify an administrator of the exhaust gas purification system 5 of a calculation result by an appropriate notification device (for example, a liquid crystal monitor, a speaker, or the like).

For example, the administrator who has received the notification of the amount of nitrogen oxide absorbed in the absorbent from the controller 509 can determine the appropriate replacement time of the absorbent on the basis of the amount of nitrogen oxide absorbed in the absorbent. For example, the amount of nitrogen oxide is compared with a predetermined threshold value, and the replacement time of the absorbent can be determined in accordance with a magnitude relationship. Note that the controller 509 itself can determine the replacement time and notify the administrator of the result. The administrator can appropriately maintain the absorption capacity of the absorbent by replacing the absorbent at the determined replacement time.

The administrator who has received the notification of the replacement time of the absorbent from the controller 509 can appropriately maintain the absorption capacity of the absorbent by replacing the absorbent at the notified replacement time.

Next, a method of determining the replacement time of the absorbent by using the carbon dioxide sensor 507 and the nitrogen oxide sensor 508 will be described. In the present embodiment, the amounts of carbon dioxide and nitrogen oxide contained in the exhaust gas discharged from the absorption unit 510 are detected by using the carbon dioxide sensor 507 and the nitrogen oxide sensor 508. The controller 509 according to the present embodiment can calculate the amount of nitrogen oxide absorbed in the absorbent or the replacement time of the absorbent by using the detection results by the carbon dioxide sensor 507 and the nitrogen oxide sensor 508.

It has been found that there is a certain correlation between the amount of carbon dioxide and nitrogen oxide contained in the exhaust gas discharged from the absorption unit 510 and the amount of nitrogen oxide absorbed in the absorbent or the appropriate replacement time of the absorbent. For example, the absorption capacity of the absorbent decreases as a large amount of nitrogen oxide is absorbed by the absorbent, and the amounts of carbon dioxide and nitrogen oxide contained in the exhaust gas discharged from the absorption unit 510 increase. Therefore, the controller 509 stores in advance the relationship between the amount of carbon dioxide and nitrogen oxide contained in the exhaust gas discharged from the absorption unit 510 and the amount of nitrogen oxide absorbed by the absorbent or the appropriate replacement time of the absorbent. This relationship can be determined by an experiment performed in advance, numerical calculation (simulation), or the like.

The controller 509 calculates (estimates) the amount of nitrogen oxide absorbed in the absorbent or the replacement time of the absorbent at an arbitrary timing during the operation of the exhaust gas purification system 5 on the basis of the above relationship and the amounts of carbon dioxide and nitrogen oxide actually detected by the carbon dioxide sensor 507 and the nitrogen oxide sensor 508. In a case of calculating the amount of nitrogen oxide absorbed by the absorbent or the replacement time of the absorbent, the controller 509 can notify an administrator of the exhaust gas purification system 5 of a calculation result by an appropriate notification device.

The administrator who has received the notification determines an appropriate replacement time of the absorbent, and can appropriately maintain the absorption capacity of the absorbent by replacing the absorbent at the determined replacement time.

The controller 509 according to the present embodiment can calculate the amount of nitrogen oxide absorbed in the absorbent or the replacement time of the absorbent by using the detection result of at least any one of the carbon dioxide sensor 507 and the nitrogen oxide sensor 508. That is, the controller 509 can also perform the calculation on the basis of only the detection result of the carbon dioxide sensor 507 or the calculation on the basis of only the detection result of the nitrogen oxide sensor 508.

Next, a configuration of the absorption unit 510 of the exhaust gas purification system 5 of the chemical absorption type and a modification of the absorption unit 510 will be described.

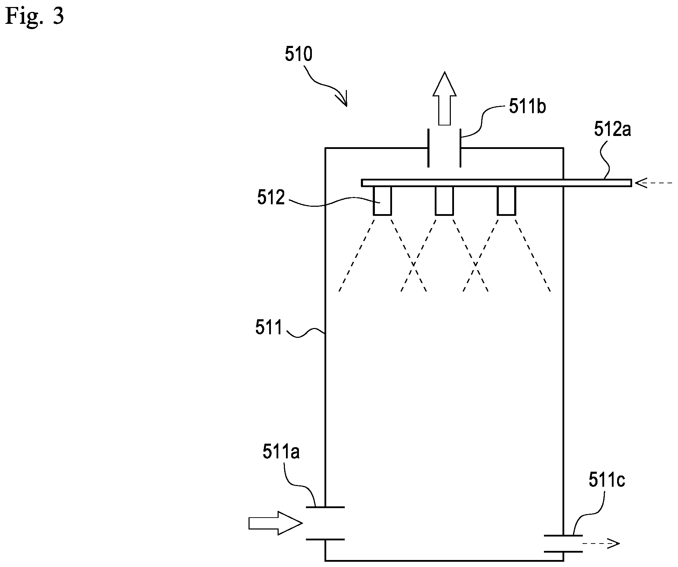

Fig. 3 shows a schematic configuration of the absorption unit 510. As shown in Fig. 3, the absorption unit 510 mainly includes a housing 511 and a nozzle 512.

The housing 511 is a hollow member (absorption chamber) for bringing the exhaust gas into contact with the absorbent. The housing 511 has, for example, a circular shape (cylindrical shape) in a plan sectional view. The shape of the housing 511 is not limited to the cylindrical shape, and can be changed to any shape. In the housing 511, an inlet port 511a, a discharge port 511b, and a recovery port 511c are formed.

The inlet port 511a is a portion for introducing the exhaust gas from the engine E into the housing 511. The inlet port 511a is formed in a lower portion of the housing 511 so as to cause the outside and the inside of the housing 511 to communicate with each other.

The discharge port 511b is a portion that discharges, to the outside of the housing 511, the exhaust gas purified by passing through the housing 511. The discharge port 511b is formed in an upper portion of the housing 511 so as to cause the outside and the inside of the housing 511 to communicate with each other.

The recovery port 511c is a portion for guiding the absorbent sprayed in the housing 511 to the outside of the housing 511 and recovering the absorbent. The recovery port 511c is formed in a lower portion (near a bottom surface) of the housing 511 so as to cause the outside and the inside of the housing 511 to communicate with each other.

The nozzle 512 sprays the absorbent in the housing 511. The nozzle 512 is disposed at the upper portion in the housing 511, and can spray the absorbent fed through a feed pipe 512a downward. Any number of nozzles 512 can be provided at any position in the housing 511. The number and disposition of the nozzles 512 are desirably determined in consideration of the shape and the like of the housing 511 so that the absorbent sprayed from the nozzles 512 and the exhaust gas can be efficiently brought into contact with each other.

In the absorption unit 510 configured in this manner, the exhaust gas can be purified. Specifically, as shown in Figs. 2 and 3, the exhaust gas guided to the inlet port 511a through the guide path L501 flows upward in the housing 511 and is discharged from the discharge port 511b to the discharge path L502.

The absorbent guided from the regeneration unit 503 to the feed pipe 512a through the circulation path L503 is sprayed from the nozzle 512 into the housing 511. The absorbent sprayed downward from the nozzle 512 comes into contact with the exhaust gas flowing through the housing 511 and absorbs carbon dioxide and nitrogen oxide contained in the exhaust gas, and thus, the exhaust gas can be purified. The absorbent having absorbed the carbon dioxide and the nitrogen oxide is recovered from the recovery port 511c and fed to the regeneration unit 503 through the circulation path L503.

Here, from the viewpoint of securing a contact opportunity between the exhaust gas and the absorbent, it is desirable to increase the vertical dimension of the housing 511 in order to secure the distance until the absorbent sprayed from the nozzle 512 reaches the bottom surface of the housing 511. On the other hand, from the viewpoint of mounting the exhaust gas purification system 5 on the tractor 600, since the mounting space of the exhaust gas purification system 5 is limited, it is desirable to reduce the vertical dimension of the absorption unit 510 (housing 511). Therefore, in the following, an example (modification) of a configuration for reducing the vertical dimension of the absorption unit 510 will be described.

In the following description, members having substantially similar configurations are denoted by similar reference signs, and the description thereof will be omitted as appropriate.

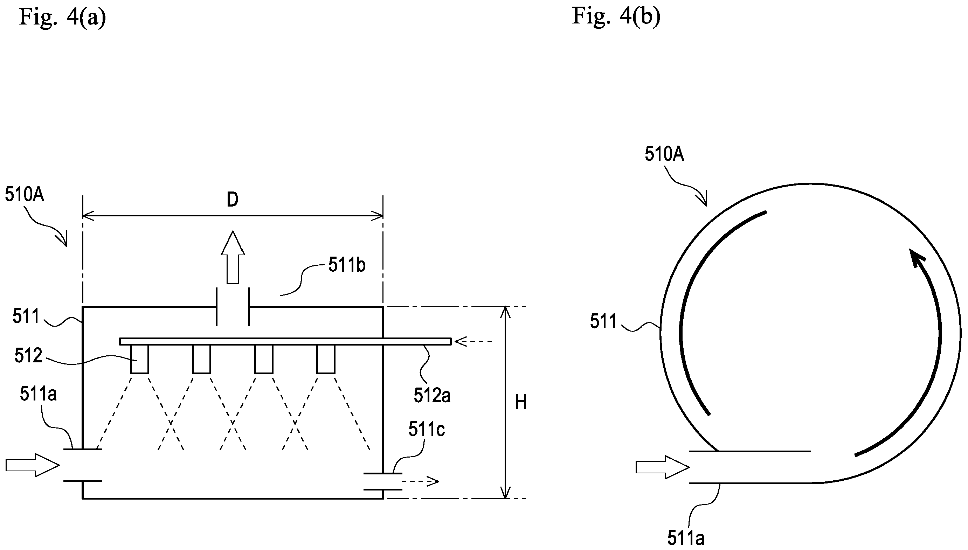

Fig. 4 shows an absorption unit 510A according to a first modification. In the absorption unit 510A according to the first modification, a diameter D of the housing 511 is formed to be large, and a total height H of the housing 511 is formed to be small. Specifically, the diameter D of the housing 511 is 1/2 or more of the total height H, and is preferably three times or more of the total height H. In this manner, by forming the diameter D to be large with respect to the total height H of the housing 511, it is possible to suppress the vertical dimension (total height H) of the housing 511 to be small while securing a contact opportunity between the absorbent sprayed from the nozzle 512 and the exhaust gas. As a result, the exhaust gas purification system 5 (absorption unit 510) can be downsized, and mountability to the tractor 600 can be improved.

Furthermore, in the absorption unit 510A according to the first modification, a flowing direction of the exhaust gas in the housing 511 is set so as to increase the contact opportunity between the absorbent and the exhaust gas. Specifically, the inlet port 511a of the housing 511 is formed so as to face a direction along an inner surface of the housing 511 (a tangential direction of the inner surface in plan view). By forming in this manner, the exhaust gas introduced from the inlet port 511a flows circumferentially in plan view along the inner surface of the housing 511 and is directed to the discharge port 511b formed above. That is, the exhaust gas circulates spirally in the housing 511. As a result, it is possible to secure a long circulation distance of the exhaust gas, and eventually, it is possible to increase the contact opportunity between the exhaust gas and the absorbent.

In the example of Fig. 4, the exhaust gas spirally flows by the disposition of the inlet port 511a in the housing 511. However, for example, the exhaust gas can spirally flow by using a member (straightening plate or the like) for controlling the flowing direction of the exhaust gas.

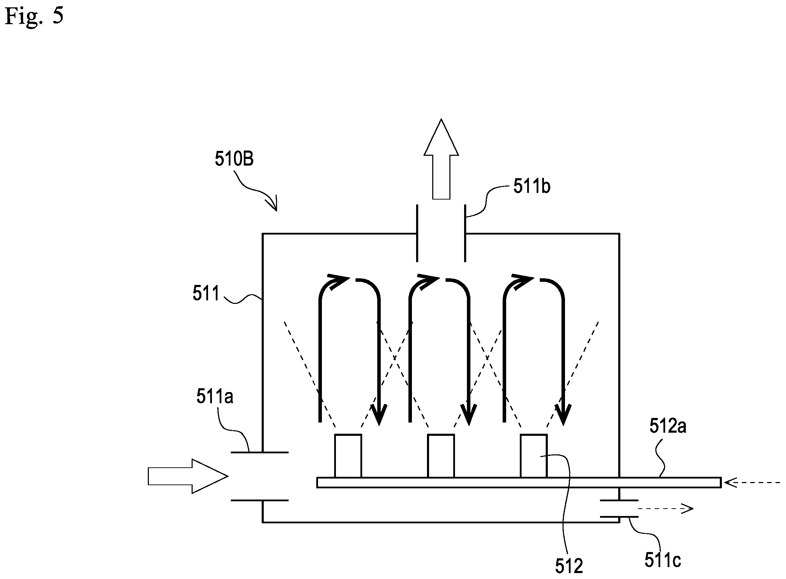

Fig. 5 shows an absorption unit 510B according to a second modification. In the absorption unit 510B according to the second modification, the nozzle 512 is disposed in the lower portion of the housing 511 and is disposed so as to spray the absorbent upward. In this configuration, the absorbent sprayed from the nozzle 512 temporarily rises in the housing 511, and then falls to the bottom surface of the housing 511 by natural fall due to gravity. By reciprocating the absorbent up and down in this manner, a moving distance of the absorbent can be increased, and the contact opportunity between the absorbent and the exhaust gas can be increased. Accordingly, the vertical dimension of the housing 511 can be reduced.

The nozzle 512 does not necessarily spray the absorbent vertically upward, and may spray the absorbent obliquely upward, for example. As a result, the moving distance of the absorbent can be more efficiently increased. The nozzle 512 is not necessarily disposed at the lower portion of the housing 511, and can be disposed, for example, at a vertical middle portion of the housing 511.

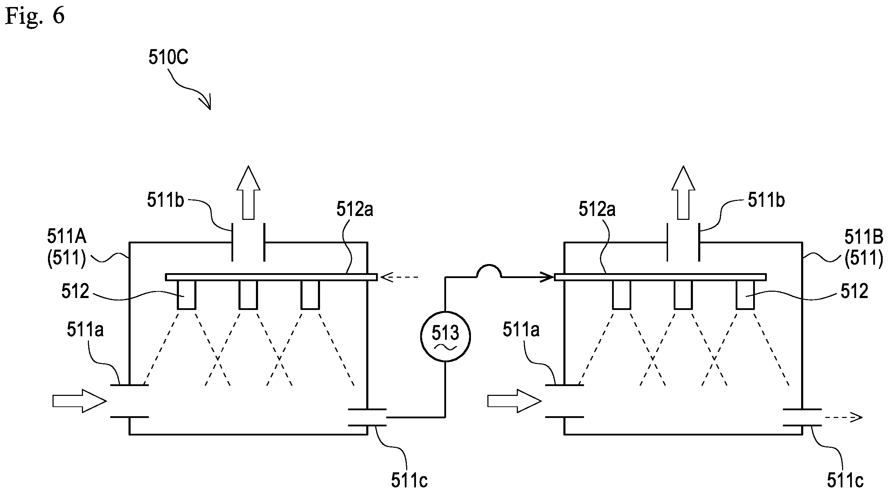

Fig. 6 shows an absorption unit 510C according to a third modification. In the absorption unit 510C according to the third modification, the housing 511 is divided into a plurality of parts, and the vertical dimension of each housing 511 is suppressed to be small. Hereinafter, a specific description will be given.

Fig. 6 shows an example in which the housing 511 is divided into two (a first housing 511A and a second housing 511B). The first housing 511A and the second housing 511B are disposed in parallel (at substantially the same height position). The exhaust gas is introduced into the first housing 511A and the second housing 511B from the inlet port 511a, and is discharged from the discharge port 511b.

The absorbent sprayed in the first housing 511A is recovered from the recovery port 511c of the first housing 511A, then fed to the second housing 511B by the pump 513, and sprayed again from the nozzle 512 of the second housing 511B.

In such a configuration, the absorbent that still has room to absorb carbon dioxide and nitrogen oxide after being sprayed on the first housing 511A to purify the exhaust gas can be reused in the second housing 511B. Therefore, it is not necessary to completely absorb carbon dioxide and the like into the absorbent by spraying at a time, and thus, it is possible to suppress the vertical dimension of the housing 511 (the first housing 511A and the second housing 511B) to be small. It is possible to efficiently utilize an absorbent that has room to absorb carbon dioxide and nitrogen oxide.

As described above, by dividing the housing 511 into a plurality of parts and disposing the parts in parallel, the vertical dimension of the disposition space of the housing 511 can be suppressed to be small.

In the example of Fig. 6, the housing 511 is divided into two. However, the number of divisions of the housing 511 is not limited to two, and the housing can be divided into three or more, for example. For example, the exhaust gas discharged from the discharge port 511b through the first housing 511A can be fed to the inlet port 511a of the second housing 511B. As a result, since the exhaust gas that cannot be completely purified in the first housing 511A can be purified again in the second housing 511B, the vertical dimension of the housing 511 can be suppressed to be small.

Next, a disposition example will be described in a case where the exhaust gas purification system 4 of the physical adsorption type or the exhaust gas purification system 5 of the chemical absorption type is mounted on the tractor 600. By mounting the exhaust gas purification system 4 or 5 on the tractor 600 and feeding the exhaust gas from the engine E of the tractor 600 to the exhaust gas purification system 4 or 5, the exhaust gas of the engine E can be purified.

Fig. 7 shows an example in which the exhaust gas purification system 4 or 5 is mounted on the tractor 600 that performs automatic driving in an unmanned manner. For convenience of explanation, the reference signs of the exhaust gas purification system 4 of the physical adsorption type and the exhaust gas purification system 5 of the chemical absorption type are also shown in the drawing, but either one of the exhaust gas purification system 4 or 5 is mounted on the tractor 600.

A tractor 600A according to a first embodiment shown in Fig. 7(a) mainly includes a vehicle body 601, wheels 602, a sensor device 603, an engine E, exhaust gas purification system 4 or 5, and the like.

The vehicle body 601 is supported by a plurality of wheels 602. The vehicle body 601 is constituted by an appropriate frame or housing. Since the tractor 600A performs automatic driving in an unmanned manner without being boarded by a driver, a living space for the driver is not formed in the vehicle body 601. Therefore, the configurations of the housing, the frame, a power transmission mechanism, and the like of the vehicle body 601 can be arbitrarily changed.

Fig. 7(a) shows an example in which the engine E and the exhaust gas purification system 4 or 5 are disposed inside a common housing. In order to prevent the heat generated in the engine E from adversely affecting the exhaust gas purification system 4 or 5 (degrading the cooling capacity or the like), the engine E and the exhaust gas purification system 4 or 5 can be partitioned by a partition member.

In the example shown in Fig. 7(a), the engine E is disposed at a front portion of the vehicle body 601, and the exhaust gas purification system 4 or 5 is disposed in a rear portion of the vehicle body 601 (behind the engine E). The power of the engine E can rotate the wheels 602 to cause the tractor 600 to travel. The exhaust gas of the engine E can be purified by the exhaust gas purification system 4 or 5.

The sensor device 603 is provided at an appropriate position of the tractor 600. The sensor device 603 includes sensors necessary for automatic driving of the tractor 600. Examples of the sensors include a non-contact sensor capable of detecting an obstacle or the like around the tractor 600, and an imaging unit capable of acquiring an image of the surroundings of the tractor 600. By controlling the traveling, stopping, steering, and the like of the tractor 600 in accordance with the detection results of these sensors, the tractor 600 can be automatically driven.

Although Fig. 7(a) shows an example in which the exhaust gas purification system 4 or 5 is disposed behind the engine E, for example, the exhaust gas purification system 4 or 5 may be disposed in a front portion of the vehicle body, and the engine E may be disposed behind the exhaust gas purification system 4 or 5. Although the tractor 600 including the wheels 602 is shown in Fig. 7(a), for example, a crawler device may be provided in addition to the wheels 602 or instead of the wheels 602.

A tractor 600B according to a second embodiment shown in Fig. 7(b) mainly includes a hood 611, a housing 612, a power transmission mechanism 613, wheels 602, a sensor device 603, an engine E, exhaust gas purification system 4 or 5, and the like.

The hood 611 accommodates the engine E. The hood 611 is provided at a front portion of the tractor 600B. The power transmission mechanism 613 is disposed behind the engine E, the power transmission mechanism 613 which transmitting the power from the engine E to the wheels 602 while appropriately shifting gears.

The housing 612 accommodates the exhaust gas purification system 4 or 5. The housing 612 is disposed behind the hood 611 and above the power transmission mechanism 613. An upper end of the housing 612 is formed to be higher than an upper end of the hood 611. The sensor device 603 is disposed, for example, in an upper portion of the housing 612.

Such a tractor 600B according to the second embodiment can be configured by, for example, replacing a cabin of a general tractor that a driver can board and drive with the housing 612 (exhaust gas purification system 4 or 5). As a result, since most of a vehicle body structure of an existing tractor can be used, the tractor 600B can be manufactured at low cost.

By disposing the sensor device 603 in the housing 612 (a structure higher than the hood 611) corresponding to the position of the cabin, the tractor 600B itself (for example, the hood 611 or the like) is less likely to obstruct detection by the sensor device 603, and an obstacle or the like in the surroundings can be suitably detected.

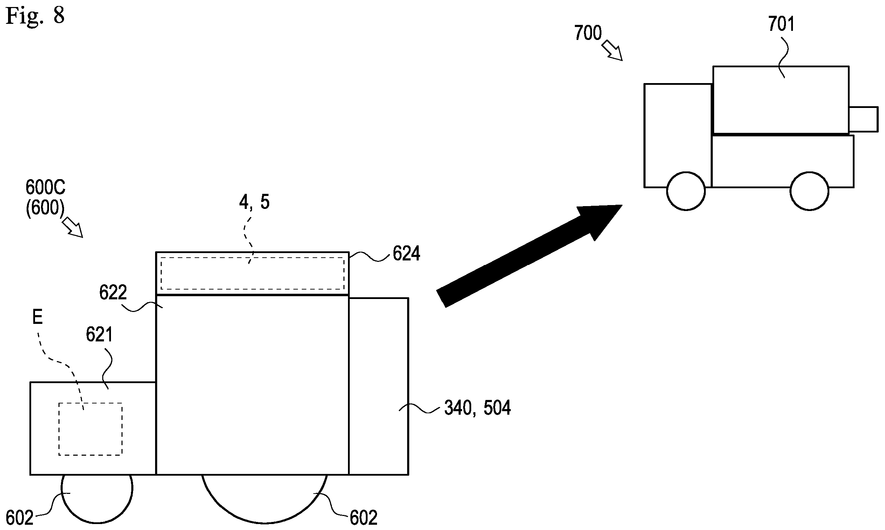

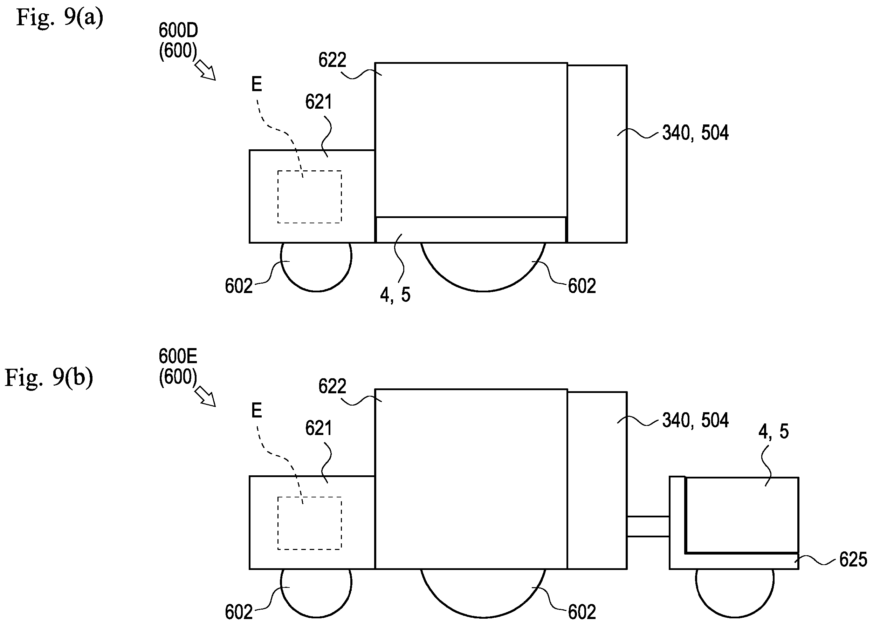

Figs. 8 and 9 show an example in which the exhaust gas purification system 4 or 5 is mounted on the tractor 600 that a driver can board and drive.

A tractor 600C according to a third embodiment shown in Fig. 8 mainly includes a hood 621, a cabin 622, wheels 602, a housing 624, an engine E, an exhaust gas purification system 4 or 5, and the like.

The hood 621 accommodates the engine E. The hood 621 is provided at a front portion of the tractor 600C. The cabin 622 is a room in which a driver boards to drive the tractor 600C. The cabin 622 is disposed behind the hood 611.

The housing 624 accommodates the exhaust gas purification system 4 or 5. The housing 624 is provided in an upper portion of the cabin 622. The housing 624 can be provided above a roof constituting a ceiling of the cabin 622. The housing 624 may be fixed to the cabin 622 (a frame constituting the cabin 622), or may be fixed to a support member (support frame) provided separately. The disposition of the exhaust gas purification system 4 or 5 is not limited to this configuration, and for example, the exhaust gas purification system 4 or 5 can be accommodated in the interior of the roof of the cabin 622. By providing the exhaust gas purification system 4 or 5 in the upper portion of the cabin 622, a space in the lower portion of the cabin 622 can be secured, and the transmission mechanism and the like of the tractor 600C can be easily disposed in the space.

In the example shown in Fig. 8, the storage unit 340 or 504 for storing the carbon dioxide recovered in the exhaust gas purification system 4 or 5 is disposed in a rear portion of the cabin 622 (for example, on a rear surface of the cabin 622). The storage units 340 and 504 may be disposed obliquely behind the cabin 622. This configuration also secures a field of view behind the driver who boards the cabin 622. The storage units 340 and 504 are configured to be detachable from the tractor 600C (cabin 622). In this manner, by making the storage units 340 and 504 detachable, the storage units 340 and 504 can be easily replaced. For example, in a case where a storage amount of carbon dioxide exceeds a predetermined value, it is possible to prevent an increase in size of the storage units 340 and 504 by replacing the storage units 340 and 504.

In the example shown in Fig. 8, an example is shown in which the secondary storage unit 701 capable of accommodating carbon dioxide is mounted on a truck 700 for cargo transportation. The storage units 340 and 504 are configured to be connectable to the secondary storage unit 701 of the truck 700, and can feed the carbon dioxide stored in the storage units 340 and 504 to the secondary storage unit 701. In this manner, the carbon dioxide stored in the storage units 340 and 504 of the tractor 600C is taken out to the outside of the tractor 600C (the truck 700 (the secondary storage unit 701)) and recovered, and thus, it is possible to prevent an increase in size of the storage units 340 and 504.

Similarly to the tractor 600C (see Fig. 8) according to the third embodiment, a tractor 600D according to a fourth embodiment shown in Fig. 9(a) mainly includes a hood 621, a cabin 622, wheels 602, an engine E, exhaust gas purification system 4 or 5, and the like.

In the tractor 600D according to the fourth embodiment, the exhaust gas purification system 4 or 5 is disposed in the lower portion of the cabin 622 (for example, below the floor surface (step) of the cabin 622). Such a configuration can suppress an increase in a total height of the tractor 600D.

Similarly to the tractor 600C (see Fig. 8) according to the third embodiment, a tractor 600E according to a fifth embodiment shown in Fig. 9(b) mainly includes a hood 621, a cabin 622, wheels 602, an engine E, exhaust gas purification system 4 or 5, and the like. Furthermore, the tractor 600E includes a towing cart 625 for towing the exhaust gas purification system 4 or 5 in addition to the vehicle body on which the engine E is mounted.

The towing cart 625 is disposed behind the cabin 622 and is connected to the vehicle body of the tractor 600E. The exhaust gas purification system 4 or 5 are disposed on the towing cart 625. In this manner, by towing the exhaust gas purification system 4 or 5 by the tractor 600E, it is not necessary to significantly change the structure of the tractor 600E itself in order to mount the exhaust gas purification system 4 or 5. Therefore, the exhaust gas purification system 4 or 5 can be used in the tractor 600E at a relatively low cost.

As described above, the tractor 600A (see Fig. 7(a)) according to an aspect of the present disclosure includes
an engine E, and
an exhaust gas purification system 4 or 5 that is disposed in front of or behind the engine E and allows removal of the carbon dioxide and the nitrogen oxide contained in the exhaust gas of the engine E.

Such a configuration can appropriately dispose the exhaust gas purification system 4 or 5.

As described above, the tractor 600B (see Fig. 7(b)) according to an aspect of the present disclosure includes
an engine E disposed inside the hood 611, and
an exhaust gas purification system 4 or 5 that are disposed behind the hood 611 and allow removal of the carbon dioxide and the nitrogen oxide contained in the exhaust gas of the engine E.

Such a configuration can appropriately dispose the exhaust gas purification system 4 or 5. By replacing the cabin of the existing tractor having the hood 611 and the cabin with the exhaust gas purification system 4 or 5, the tractor 600B on which the exhaust gas purification system 4 or 5 is mounted can be configured relatively easily.

The exhaust gas purification system 4 or 5
is disposed above a power transmission mechanism 613 that transmits power from the engine E to wheels 602.

Such a configuration can appropriately dispose the exhaust gas purification system 4 or 5. That is, the exhaust gas purification system 4 or 5 can be disposed by using a space above the power transmission mechanism 613.

The tractor 600B further includes
a housing 612 that accommodates the exhaust gas purification system 4 or 5, in which
an upper end of the housing 612
is located at a position higher than an upper end of the hood 611.

Such a configuration can appropriately dispose the exhaust gas purification system 4 or 5. That is, even the exhaust gas purification system 4 or 5 having relatively large vertical dimensions can be easily mounted on the tractor 600B. Since the sensor device 603 can be attached to a relatively high position (the upper end of the housing 612), detection by the sensor device 603 can be suitably performed.

As described above, the tractor 600C (see Fig. 8) according to an aspect of the present disclosure includes
a cabin 622 that a driver can board, and
an exhaust gas purification system 4 or 5 that are disposed above the cabin 622 and allow removal of the carbon dioxide and the nitrogen oxide contained in the exhaust gas of the engine E.

Such a configuration can appropriately dispose the exhaust gas purification system 4 or 5. That is, a space in the lower portion of the cabin 622 can be secured, and the transmission mechanism and the like of the tractor 600C can be easily disposed in the space.

As described above, the tractor 600D (see Fig. 9(a)) according to an aspect of the present disclosure includes
a cabin 622 that a driver can board, and
exhaust gas purification system 4 or 5 that is disposed below the cabin 622 and allows removal of the carbon dioxide and the nitrogen oxide contained in the exhaust gas of the engine E.

Such a configuration can appropriately dispose the exhaust gas purification system 4 or 5. That is, the exhaust gas purification system 4 or 5 can be mounted on the tractor 600D while suppressing an increase in the total height of the tractor 600D.

As described above, the tractor 600E (see Fig. 9(b)) according to an aspect of the present disclosure includes
a vehicle body having an engine E,
a towing cart 625 (towed vehicle) towed by the vehicle body,
exhaust gas purification system 4 or 5 that are disposed in the towed vehicle and allow removal of the carbon dioxide and the nitrogen oxide contained in the exhaust gas of the engine E.

Such a configuration can appropriately dispose the exhaust gas purification system 4 or 5. It is not necessary to significantly change the structure of the tractor 600E itself in order to mount the exhaust gas purification system 4 or 5. Therefore, the exhaust gas purification system 4 or 5 can be used in the tractor 600E at a relatively low cost.

The exhaust gas purification system 4 or 5 included
an storage unit 340 or 504 (storage) capable of storing the removed carbon dioxide,
the storage unit 340 or 504
is detachably provided in the tractor 600 (see Figs. 8 and 9).

Such a configuration allows the storage units 340 and 504 to be easily replaced. Accordingly, it is possible to prevent an increase in size of the storage units 340 and 504.

The exhaust gas purification system 4 or 5 includes
an storage unit 340 or 504 (storage) capable of storing the removed carbon dioxide, and
the storage unit 340 or 504
is provided in a rear portion of the cabin 622 (see Figs. 8 and 9).

Such a configuration allows the storage units 340 and 504 to be appropriately disposed.

The exhaust gas purification system 4 or 5 includes
an storage unit 340 or 504 (storage) capable of storing the removed carbon dioxide,
the storage unit 340 or 504
is provided outside of the tractor 600 and is configured to be connectable to a secondary storage unit 701 (secondary storage) capable of storing carbon dioxide.

Such a configuration can prevent an increase in size of the storage units 340 and 504.

The exhaust gas purification system 5 includes
an absorption unit 510 that absorbs the carbon dioxide and the nitrogen oxide contained in the exhaust gas into an absorbent, and
a regeneration unit 503 that recovers carbon dioxide from the absorbent fed from the absorption unit 510 and feeds the absorbent to the absorption unit 510 again.

Such a configuration can remove carbon dioxide and nitrogen oxide contained in the exhaust gas with a simple configuration. That is, since nitrogen oxide can be absorbed in addition to carbon dioxide in the absorption unit 510, it is not necessary to separately provide an exhaust gas purification device for purifying nitrogen oxide, and the configuration of the exhaust gas purification system 5 can be simplified.

The exhaust gas purification system 4 includes
an adsorption/desorption unit 310 (adsorption unit) that allows adsorption of the carbon dioxide and the nitrogen oxide contained in the exhaust gas,
a first cooler (first cooler 321 and third cooler 323) that cools at least one of the exhaust gas guided to the adsorption/desorption unit 310, the adsorption/desorption unit 310, or the carbon dioxide desorbed from the adsorption/desorption unit 310 by using a refrigerant, and
a second cooler (second cooler 322 and fourth cooler 324) that cools at least one of the exhaust gas guided to the adsorption/desorption unit 310, the adsorption/desorption unit 310, or the carbon dioxide desorbed from the adsorption/desorption unit 310 by using the refrigerant flowing through a path independent of the first cooler.

Such a configuration can remove carbon dioxide and nitrogen oxide contained in the exhaust gas and reduce power consumption with a simple configuration. By making the flow paths of the refrigerant in the first cooler and the second cooler independent from each other, for example, the refrigerant having a high temperature in one cooler does not lower the cooling capacity of the other cooler, and thus, power consumption for cooling can be reduced.

As described above, the exhaust gas purification system 5 (see Figs. 2 and 4) according to an aspect of the present disclosure includes
an absorption unit 510A that absorbs carbon dioxide and nitrogen oxide contained in the exhaust gas into the absorbent, and
a regeneration unit 503 that recovers carbon dioxide from the absorbent fed from the absorption unit 510A and feeds the absorbent to the absorption unit again, in which
the absorption unit 510A includes
a housing 511 having a cylindrical shape and a diameter D of 1/2 or more of the total height H, and
a nozzle 512 (spray unit) that sprays the absorbent in the housing 511.

Such a configuration can reduce the vertical dimension of the absorption unit 510A. By increasing the ratio of the dimension of the diameter D to the total height H of the housing 511, it is possible to reduce the vertical dimension of the absorption unit 510A while ensuring the absorbency in the absorption unit 510A.

The housing 511
is formed to have the diameter D that is three times or more of the total height H.

Such a configuration can reduce the vertical dimension of the absorption unit 510A.

As described above, the exhaust gas purification system 5 (see Figs. 2 and 5) according to an aspect of the present disclosure includes
an absorption unit 510B that absorbs carbon dioxide and nitrogen oxide contained in the exhaust gas into the absorbent, and
a regeneration unit 503 that recovers carbon dioxide from the absorbent fed from the absorption unit 510B and feeds the absorbent to the absorption unit 510B again, in which
the absorption unit 510B includes
a housing 511, and
a nozzle 512 (spray unit) that sprays the absorbent upward in the housing 511.

Such a configuration can reduce the vertical dimension of the absorption unit 510B. Since it is possible to increase the contact opportunity between the absorbent and the exhaust gas by increasing the moving distance of the absorbent, it is possible to suppress the vertical dimension of the housing 511 to be small.

As described above, the exhaust gas purification system 5 (see Figs. 2 and 6) according to an aspect of the present disclosure includes
an absorption unit 510C that absorbs carbon dioxide and nitrogen oxide contained in the exhaust gas into the absorbent, and
a regeneration unit 503 that recovers carbon dioxide from the absorbent fed from the absorption unit 510C and feeds the absorbent to the absorption unit 510C again, in which
the absorption unit 510C includes
a plurality of housings 511, and
a nozzle 512 (spray unit) that sprays the absorbent in the plurality of housings 511.

Such a configuration can reduce the vertical dimension of the absorption unit 510C. Since carbon dioxide and the like can be absorbed in the plurality of housings 511, it is possible to reduce the vertical dimension of each housing 511, and eventually, it is possible to reduce the vertical dimension of the entire absorption unit 510C.

The nozzle 512 (spray unit)
recovers the absorbent sprayed in one of the plurality of housings 511 and sprays again in another one of the plurality of housings 511.

Such a configuration allows efficient utilization of the absorbent.

A tractor 600 (see Figs. 7 to 9) according to an aspect of the present disclosure includes
an exhaust gas purification system 5.

Such a configuration can reduce the vertical dimension of the absorption unit 510C and further reduce the size of the tractor 600.

Note that the towing cart 625 is an embodiment of a towed vehicle.

The storage units 340 and 504 are an embodiment of a storage.

The secondary storage unit 701 is an embodiment of a secondary storage.

The adsorption/desorption unit 310 is an embodiment of an adsorption unit.

The nozzle 512 is an embodiment of a spray unit.

Although the embodiments of the present invention have been described above, the present invention is not limited to the above configuration, and various modifications can be made within the scope of the invention described in the claims.

For example, the configurations of the embodiments and modifications can be appropriately combined.

The exhaust gas purification system 4 or 5 according to the above embodiments can be mounted on working vehicles, agricultural vehicles, industrial vehicles, transportation equipment, and the like other than tractors.

The exhaust gas purification system 4 or 5 and the like according to the embodiments have been described to purify the exhaust gas discharged from the engine E, but can be used for other arbitrary purposes. For example, it is also possible to purify exhaust gas discharged from a boiler or a gas turbine of a thermal power plant or the like, and exhaust gas generated in a steel mill or the like.

### INDUSTRIAL APPLICABILITY

The present invention is applicable to a tractor including an exhaust gas purification system.

### REFERENCE SIGNS LIST

4: Exhaust gas purification system
5: Exhaust gas purification system
310: Adsorption/desorption unit
340: Storage unit
503: Regeneration unit
504: Storage unit
510: Absorption unit
511: Housing
512: Nozzle
600: Tractor
602: Wheel
611: Hood
612: Housing
613: Power transmission mechanism
622: Cabin
625: Towing cart
701: Secondary storage unit

## Claims

1. A tractor comprising:
an engine; and
an exhaust gas purification system that is disposed in front of or behind the engine and allows removal of carbon dioxide and nitrogen oxide contained in exhaust gas of the engine.

2. The tractor according to claim 1, wherein
the exhaust gas purification system includes
an absorption unit that absorbs the carbon dioxide and the nitrogen oxide contained in the exhaust gas into an absorbent, and
a regeneration unit that recovers carbon dioxide from the absorbent fed from the absorption unit and feeds the absorbent to the absorption unit again.

3. The tractor according to claim 1, wherein
the exhaust gas purification system includes
an adsorption unit that allows adsorption of the carbon dioxide and the nitrogen oxide contained in the exhaust gas,
a first cooler that cools at least one of the exhaust gas guided to the adsorption unit, the adsorption unit, or the carbon dioxide desorbed from the adsorption unit by using a refrigerant, and
a second cooler that cools at least one of the exhaust gas guided to the adsorption unit, the adsorption unit, or the carbon dioxide desorbed from the adsorption unit by using the refrigerant flowing through a path independent of the first cooler.
